# EUROPÄISCHE PATENTANMELDUNG

(11) **EP 2 048 536 A2**
(43) Veröffentlichungstag der Anmeldung: **15.04.2009**
(21) Anmeldenummer: 08105533.7
(22) Anmeldetag: 09.10.2008
(51) Int. Cl.: G02B 27/48

(54) **Optische Anzeigeeinrichtung mit einer Laserlichtquelle**

(30) Priorität: 11.10.2007 DE 102007048851
(71) Anmelder: ROBERT BOSCH GMBH, 70442 Stuttgart (DE)
(72) Erfinder: Herzog, Bernhard, 70619 Stuttgart (DE); Thominet, Vincent, CH 1110 Morges (FR); Fiess, Reinhold, 77770 Durbach (DE); Grimm, Dietmar, 71696 Moeglingen (DE)

(57) **Zusammenfassung**

Die Erfindung bezieht sich auf eine optische Anzeigeeinrichtung mit einer Laserlichtquelle (22, 23, 24), einer Laserstrahllenkeinrichtung (27) sowie einer Abbildungsoptik (29), bei der die Abbildungsoptik eine Reflexionsfläche (28) mit einer Mehrzahl von nebeneinander angeordneten Reflexionselementen aufweist, die jeweils einzeln konkav oder konvex gekrümmt sind. Hierdurch soll die numerische Appertur vergrößert und der Speckleeffekt verringert werden.

## Beschreibung

### STAND DER TECHNIK

Die Erfindung liegt auf dem Gebiet der optischen Anzeigeeinrichtungen, die sich einer Laserlichtquelle bedienen um ein- oder mehrfarbige Bilder oder generell Informationen optisch darzustellen.

Grundsätzlich sind verschiedene Arten von optischen Anzeigen bekannt, die sich verschiedener technischer Prinzipien bei der Bilderzeugung bedienen. Einerseits sind Leuchtanzeigen bekannt, die einzeln leuchtende Pixel in Form von Halbleiterlichtquellen oder sogenannten Lichtventilen mit Hintergrundbeleuchtung aufweisen, wie beispielsweise bei den gängigen Computer- und Fernsehbildschirmen.

Andererseits sind auch Projektionsprinzipien bekannt, die sich sogenannter Mikrodisplays bedienen, welche nach der eigentlichen Bilderzeugung mittels einer Abbildungsoptik für den Betrachter wahrnehmbar gemacht werden.

Es gibt Modelle, die mit sehr kleinen LCD-Matrizen im Durchlichtprinzip oder im Reflexionsprinzip arbeiten.

Aus der US 6183092 ist ein Laserprojektorsystem bekannt, das sich eines reflektiven Flüssigkristallarrays zur Modulation und entsprechenden Bilderzeugung bedient.

In diesem Dokument ist auch das Problem von Laserspeckles beschrieben, einem Phänomen, das sich bei Verwendung von Laserlicht zur Bilderzeugung einstellt und das auf der hohen Koherenz des Laserlichts beruht. Es ergeben sich im Bild körnige Strukturen, die von Interferenzen aufgrund von Unregelmäßigkeiten der beteiligten optischen Flächen herrühren.

Aus der US 5563710 ist ein Laserprojektionssystem bekannt, bei dem mittels eines Laserarrays ein Gegenstand beleuchtet und über ein Regelsystem mit der reflektierten Lichtstärke als Regelgröße ein Abbild erzeugt wird, das sich derselben Laserlichtquelle über Beamsplitter zur Lichterzeugung bedient.

Beispielsweise aus der US 5971545 ist eine Projektionsanzeige bekannt, die mit einem reflektierenden Modulator arbeitet.

Die US 5777789 bedient sich eines ähnlichen Prinzips mit doppelt brechenden Lichtschaltelementen.

Aus dem Stand der Technik sind weiter auch Maßnahmen bekannt, die dem Problem des Laserspeckles entgegenwirken.

Beispielsweise ist aus der WO 2004064410 A1 eine Laserprojektionsanordnung bekannt, die ein Mikrolinsenarray und eine Laserlichtquelle aufweist, wobei als Laserlichtquelle ein Multimodenlaser verwendet wird, um das Speckling zu reduzieren.

Aus der US 2005/0248849 A1 ist ein optisches Anzeigeelement bekannt mit einem Mikrolinsenarray und einer Reflexionsfläche. In Zusammenhang mit der Reflexion wird das Mikrolinsenarray zur sogenannten Pupillenvervielfachung und -erweiterung verwendet, wodurch in Zusammenhang mit koherentem Licht die Koherenz verringert und der Speckleeffekt herabgesetzt wird.

Aus der EP 1521110 A1 ist eine als Koherenzminderer bezeichnete Anordnung bekannt, in der mittels einer Vielzahl von doppelbrechenden Elementen verschiedene Anteile eines ein Mikrolinsenarray durchlaufenden Lichts unterschiedlich bezüglich des optischen Weges versetzt werden, wodurch ebenfalls die Koherenz vermindert oder zerstört und damit der Speckleeffekt verringert wird.

### VORTEILE DER ERFINDUNG

Vor dem Hintergrund des Standes der Technik liegt der vorliegenden Erfindung die Aufgabe zugrunde, eine optische Anzeigeeinrichtung zu schaffen, die konstruktiv möglichst einfach aufgebaut ist und bei einer guten Abbildungsqualität bei Verwendung einer Laserlichtquelle Speckleeffekte möglichst weitgehend vermindert. Zudem soll eine möglichst hohe Lichteffizienz der Anzeige erreicht werden.

Die Aufgabe wird gemäß der Erfindung mit den Merkmalen des Patentanspruchs 1 gelöst.

Die erfindungsgemäße Anzeigeeinrichtung weist in der Abbildungsoptik eine Reflexionsfläche mit einer Mehrzahl von Reflexionselementen auf, die einzeln konvex oder konkav gekrümmt sind und damit optische Abbildungselemente bilden. Diese tragen zu einer hohen Reflexivität der Reflexionsfläche und damit zu einer hohen Lichtstärke der Anzeigeeinrichtung bei. Ebenso wie ein Mikrolinsenarray in der Abbildung wirkt auch ein aus Reflexionselementen gebildetes Array als Streufläche, wobei durch entsprechende Verspiegelung eine hohe Reflexion in Richtung der im Strahlengang folgenden Abbildungselemente erreicht wird.

Die Verwendung von reflektierenden Elementen, beispielsweise Mikrospiegeln, hat gegenüber der Verwendung von Mikrolinsen die Vorteile einerseits geringer Dämpfungsverluste und andererseits verringerte Dispersion, so dass Farbfehler vermieden oder zumindest verringert werden können. Entsprechende Reflexionsflächen mit Reflexionselementen können im Spritzgussverfahren, durch Prägung oder Ablationsverfahren mit nachfolgender Verspiegelung oder Beschichtung durch Bedampfen oder unter Verwendung von Metallfolien besonders kostengünstig hergestellt werden.

Der sogenannte Pitch, das heißt der durchschnittliche Mittenabstand der Reflexionselemente kann gemäß der Erfindung zwischen 50 und 300 Mikrometern, besonders vorteilhaft bei etwa 50 Mikrometern liegen.

Eine vorteilhafte Ausgestaltung der Erfindung sieht vor, dass der durchschnittliche Mittenabstand der Reflexionselemente kleiner ist als der Durchmesser des Laserfleckes auf der Reflexionsfläche.

Eine vorteilhafte Ausgestaltung der Erfindung sieht vor, dass die Abbildungsoptik zusätzlich ein Mikrolinsenarray aufweist, das der Reflexionsfläche im Strahlengang vor- oder nachgeordnet ist.

Innerhalb der Abbildungsoptik durchlaufen einzelne Laserstrahlen, die jeweils einzelnen darzustellenden Bildpunkten entsprechen, sowohl die Reflexionsfläche als auch das Mikrolinsenarray, wobei einerseits durch Verteilung des Laserspots auf mehrere Reflexionselemente und/oder das Durchlaufen mehrerer paralleler Mikrolinsen eine sogenannte Pupillenvervielfachung beziehungsweise -erweiterung stattfindet, die auch zu einer Vergrößerung der numerischen Appertur der Abbildungsoptik führt. Dies führt unter anderem auch zu einer höheren Lichtstärke der Anzeige und zu einer Reduktion der Speckleeffekte durch Überlagerung verschiedener durch die Mikroelemente erzeugter Bilder. Insbesondere bei Hintereinanderschaltung mehrerer solcher Mikroarray-Elemente wie eines Mikroarrays aus Reflexionselementen mit einem Mikrolinsenarray ergibt sich dabei ein deutlicher bildverbessernder Effekt.

Eine weitere vorteilhafte Ausgestaltung der Erfindung sieht vor, dass die Reflexionselemente Kugeloberflächenabschnitte aufweisen.

In diesem Fall bilden die Reflexionselemente beispielsweise sphärische Hohlspiegel, entweder in konkaver oder konvexer Form, mit kurzer Brennweite, so dass die Reflexionsfläche optisch als Streufläche wirkt und wobei die Wirkung der Reflexionselemente weitgehend unabhängig von der Einstrahlrichtung des Laserstrahls ist. Es muss nur bei der Gestaltung der Tiefe der Reflexionselemente bei besonders flachen Einstrahlrichtungen darauf geachtet werden, dass keine zu große Selbstabschattung stattfindet.

Die Reflexionselemente können dagegen auch vorteilhaft eine parabolische Form aufweisen, die für bestimmte Abbildungsaufgaben vorteilhaft ist und durch die eine noch stärkere Lichtkonzentration auf die optischen Achsen der Abbildungsoptik möglich wird. Dabei können je nach der gewünschten Ein- und Ausstrahlrichtung die Symmetrieachsen der Reflexionselemente gegenüber der Reflexionsfläche geneigt sein.

Dabei können die Parabolachsen der Reflexionselemente beispielsweise zwischen der Flächennormalen der Reflexionsfläche und der Einstrahlrichtung des Lasers liegen.

Die Reflexionsfläche kann dabei eben sein, was die Herstellung vereinfacht und die Erzeugung einer ebenen Bildebene in der Laserprojektion ermöglicht.

Es kann jedoch auch gewünscht sein, eine konvexe oder konkave Reflexionsfläche zu bilden, beispielsweise um Abbildungsfehler zu korrigieren oder eine besondere Art der Abbildung zu ermöglichen. Damit kann durch Formung der Reflexionsfläche beispielsweise eine telezentrische Linse eingespart werden, indem die Reflexionsfläche für sich bereits makroskopisch einen Hohlspiegel bildet. Dieser kann grundsätzlich beispielsweise sphärische oder parabolische Form aufweisen.

Vorteilhaft können die einzelnen Reflexionselemente, jedoch auch die Flächen zwischen diesen und die gesamte Reflexionsfläche metallisch beschichtet sein oder aus einem gut reflektierenden Metall bestehen.

Damit lässt sich eine hohe optische Effizienz der Anordnung erreichen.

Konstruktiv besonders einfach und kostensparend lässt sich gemäß der Erfindung eine Abbildungsoptik aufbauen, bei der die Reflexionsfläche durch eine reflektierend beschichtete Grenzfläche eines mikrostrukturierten, optisch transparenten Körpers gebildet ist.

Somit kann der transparente Körper für den Strahlengang verwendet und durch das Laserlicht durchstrahlt werden, wobei beim Austritt aus dem Körper unmittelbar eine Reflexion an der Reflexionsfläche und Rückspiegelung in den transparenten Körper stattfindet.

Innerhalb des transparenten Körpers können weitere optische Elemente vorgesehen sein, die ohne Notwendigkeit einer weiteren Justierung unmittelbar gegenüber der Reflexionsfläche optimal positioniert sind. Beispielsweise kann in den optisch transparenten Körper ein Mikrolinsenarray integriert sein.

Auf diese Weise sind die Reflexionsfläche beziehungsweise die einzelnen Reflexionselemente und ein Mikrolinsenarray in Bezug aufeinander automatisch justiert. Der entsprechende transparente Körper kann mit den üblichen Verfahren der Mikromechanik hergestellt und verarbeitet werden und ist als bauliche Einheit in eine Abbildungsoptik einsetzbar.

Grundsätzlich können auch mehrere Grenzflächen des transparenten Körpers als Mikroarrays von Reflexionselementen ausgestaltet sein, um im optischen Strahlengang mehrere solcher Reflexionsflächen vorzusehen.

Um bei der Abbildung durch die Abbildungsoptik bestimmte Einflüsse durch die Periodizität der Reflexionsfläche und eventuell verwendeter Mikrolinsenarrays zu vermeiden und auch bei der Überlagerung von Bildern benachbarter Reflexionselemente oder Mikrolinsen eine gute statistische Mittelung zu erreichen, die die auftretenden Speckleeffekte weiter reduziert, kann gemäß der Erfindung vorteilhaft vorgesehen sein, dass der Mittenabstand der Reflexionselemente und/oder der Mittenabstand der Mikrolinsen des Mikrolinsenarrays entlang der von dem Laserstrahl überstrichenen Fläche variiert.

Der typische Mittenabstand kann bei 50 Mikrometern bis 300 Mikrometern liegen, wobei dieser über die Fläche, das heißt über die Reflexionsfläche oder die Fläche des Mikrolinsenarrays beispielsweise um mehr als 10 % insbesondere um mehr als 30 % variieren kann.

Es kann weiter vorteilhaft vorgesehen sein, dass die Krümmung der einzelnen Reflexionselemente und/oder die Brennweite der einzelnen Mikrolinsen des Mikrolinsenarrays entlang der von dem Laserstrahl überstrichenen Fläche variiert.

Die typische Krümmung der Reflexionselemente soweit diese als sphärische Elemente ausgebildet sind, kann beispielsweise bei einem Radius von 185 Mikrometern oder - 185 Mikrometern liegen. Betragsmäßig kann der Radius vorteilhaft zwischen 50 und 300 Mikrometern, insbesondere zwischen 100 und 250 Mikrometern liegen. Auch dieser Radius kann ebenso wie die Brennweite der Mikrolinsen in einem gegebenenfalls verwendeten Mikrolinsenarray über die Fläche um wenigstens 10 %, insbesondere wenigstens 30 % statistisch variieren.

### ZEICHNUNGEN

Im Folgenden wird die Erfindung anhand eines Ausführungsbeispiels in einer Zeichnung gezeigt und anschließend beschrieben.

Dabei zeigt
Figur 1 schematisch eine optische Abbildungseinrichtung mit einer Laserlichtquelle;
Figur 2 ein Mikrolinsenarray mit einer Reflexionsfläche;
Figur 3 den Strahlengang innerhalb zweier Mikrolinsen eines Mikrolinsenarrays;
Figur 4 den Strahlengang an einer Reflexionsfläche;
Figur 5 zwei benachbarte Reflexionselemente im Querschnitt;
Figur 6 das Simulationsergebnis einer Lichtstrahlensimulation;
Figur 7 den Aufbau einer Anzeigeeinrichtung gemäß der Erfindung;
Figur 8 eine Draufsicht auf eine Reflexionsfläche mit Reflexionselementen;
Figur 9 einen Querschnitt eines Mikrolinsenarrays;
Figur 10 einen Querschnitt durch eine Vielzahl von Reflexionselementen;
Figur 11 einen Querschnitt durch Reflexionselemente mit parabolischer Gestaltung;
Figur 12 einen transparenten Körper mit einem Mikrolinsenarray und einer Reflexionsfläche mit Reflexionselementen.

### BESCHREIBUNG DER AUSFÜHRUNGSBEISPIELE

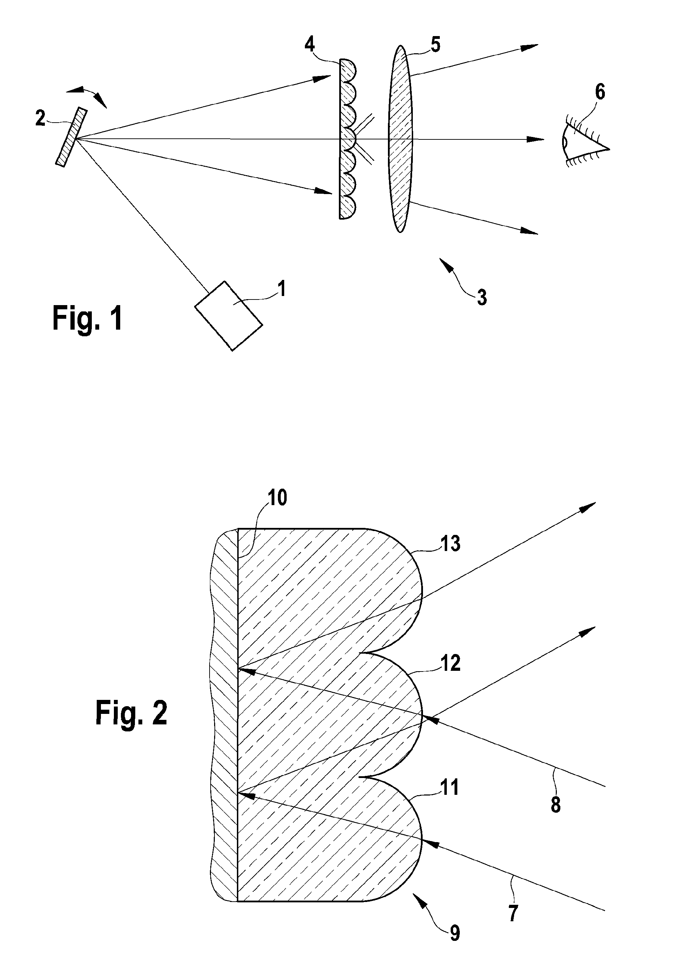

Figur 1 zeigt schematisch den Aufbau einer optischen Anzeigeeinrichtung mit einer Laserlichtquelle 1, einer Laserstrahllenkeinrichtung 2 sowie einer Abbildungsoptik 3. Die Abbildungsoptik weist eine Streuscheibe 4 mit einem Mikrolinsenarray und weitere Abbildungselemente auf, die mit 5 bezeichnet und symbolisch durch eine einzelne Linse repräsentiert sind.

Dadurch dass die Streuscheibe 4 mit einem Mikrolinsenarray versehen ist, werden die Bildpunkte, die mittels des Laserstrahls auf die Streuscheibe gezeichnet werden, besonders effektiv in Richtung des Betrachters 6 gebündelt und können lichtstark durch folgende optische Elemente abgebildet werden.

Die Figur 2 zeigt schematisch den Strahlengang zweier paralleler Laserlichtstrahlen 7, 8, die in ein Mikrolinsenarray 9 eintreten, an dessen Rückwand 10 reflektiert werden und aus dem Array wieder austreten.

Der erste Strahl 7 tritt in eine erste Mikrolinse 11 ein, wird an der Rückwand 10 reflektiert und tritt durch eine zweite Mikrolinse 12 wieder aus.

Der zweite Strahl 8 tritt durch die zweite Mikrolinse 12 ein, wird an der Rückwand 10 reflektiert und tritt durch eine dritte Mikrolinse 13 wieder aus.

Da die einzelnen Lichtstrahlen bezüglich ihrer Breite eine endliche Ausdehnung haben, die beispielsweise mit einem Intensitätsprofil entsprechend einer Gaußverteilung dargestellt werden kann, tritt ein Teil jedes einzelnen Lichtstrahls auch in benachbarte Mikrolinsen ein und jeweils durch benachbarte Mikrolinsen wieder aus.

Die Abbildung eines einzelnen eintretenden Strahls findet daher regelmäßig durch eine Mehrzahl von Mikrolinsen und deren überlagerte Bildet statt.

Insgesamt ergibt sich für eine Abbildung der Effekt der sogenannten Pupillenerweiterung beziehungsweise Pupillenvervielfachung, der eine Vergrößerung der numerischen Appertur sowie eine Verringerung der geometrischen Koherenz, das heißt der Koherenz parallel einfallender Lichtstrahlteile mit sich bringt und damit den sogenannten Speckleeffekt, das heißt die Interferenz verschiedener Bildteile miteinander durch Unregelmäßigkeiten an reflektierenden oder abbildenden Oberflächen verringert.

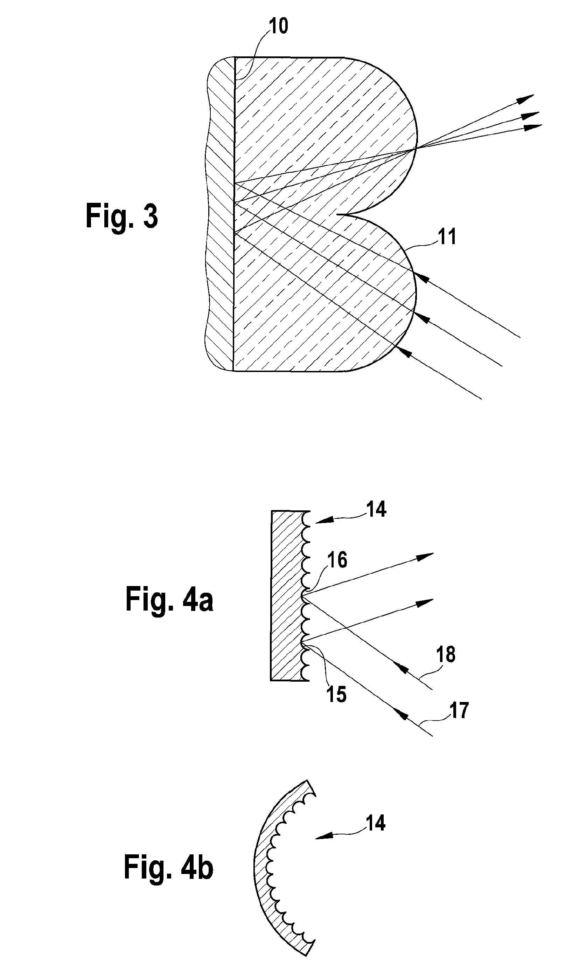

In der Figur 3 ist dargestellt wie die Strahlteile, die durch eine einzelne Mikrolinse 11 einfallen, nach der Reflexion an der Rückfläche des Mikrolinsenarrays fokussiert werden. Das Mikrolinsenarray wirkt wegen der kurzen Brennweite der Mikrolinse wie eine Streuscheibe mit intensivierter Reflexion.

In der Figur 4 ist schematisch eine Reflexionsfläche 14 gezeigt, in der eine Vielzahl von Reflexionselementen 15, 16 beispielsweise in Form von sphärischen Mulden zusammengefasst sind. Die entsprechenden Reflexionselemente können in einer ebenen Fläche nebeneinander liegen, sie können jedoch auch, wie im rechten Teil der Figur 4 gezeigt, in einer gekrümmten Fläche liegen.

In der Figur 4 sind Einfallsstrahlen 17, 18 gezeigt, die jeweils in einzelnen Reflexionselementen reflektiert werden.

Für die einzelnen Strahlen gilt bei der Reflexion das in Zusammenhang mit Figur 2 Gesagte, dass nämlich die Ausdehnung eines Strahls mehrere benachbarte Reflexionselemente überdecken kann, so dass jeder Strahl durch mehrere Reflexionselemente abgebildet wird und die Bilder der Reflexionselemente sich überdecken, was zu einem Ausgleich von interferometrischen Effekten und damit zu einer Verringerung des Speckleeffekts führt.

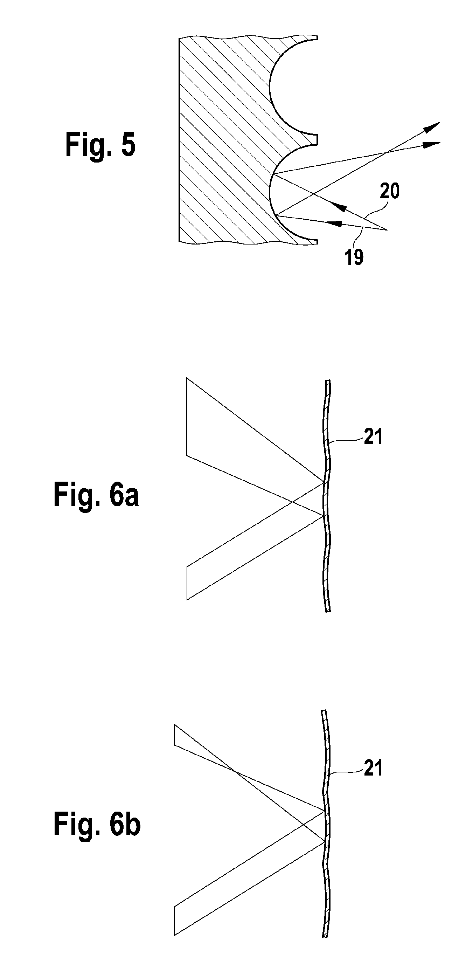

In der Figur 5 ist eine Fokussierung von zwei Strahlen 19, 20 an den kurzbrennweitigen Reflexionselementen gezeigt.

Die Figur 6 zeigt das Ergebnis einer Simulation, bei der eine Vielzahl von Lichtstrahlen von einer Reflexionsfläche 21 mit reflexiven Elementen mit einem Radius von 185 Mikrometern reflektiert worden sind. Es zeigt sich, dass der Effekt der Pupillenerweiterung und der Vergrößerung der numerischen Appertur in diesem Fall, gezeigt auf der linken Seite, ebenso eintritt wie in dem Fall eines Krümmungsradius von - 185 Mikrometern, das heißt einer konvexen Gestaltung der Reflexionselemente, dargestellt auf der rechten Seite. Als Pitch wurden bei der Simulation 50 Mikrometer vorausgesetzt.

Der Vorteil gegenüber einem Mikrolinsenarray liegt insbesondere darin, dass die Gesamtwirkung weitgehend unabhängig von der Wellenlänge ist und dass die Abhängigkeit vom Einfallwinkel ebenfalls gegenüber der Verwendung von Mikrolinsen verringert ist.

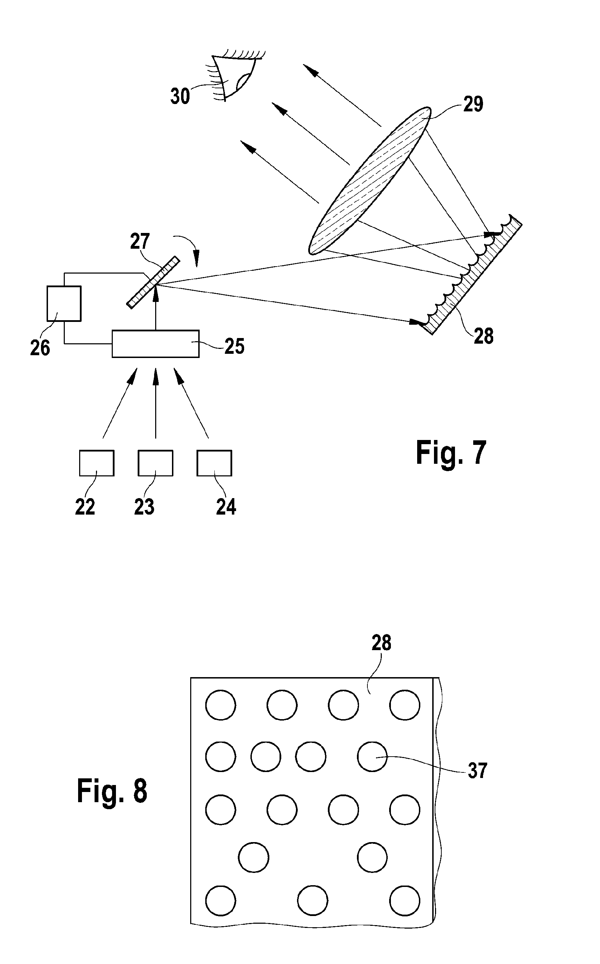

Die Figur 7 zeigt den Gesamtaufbau einer optischen Anzeigeeinrichtung mit Laserlichtquellen 22, 23, 24, die verschiedenfarbiges Licht bereitstellen können, die jedoch auch durch einen durchstimmbaren Laser ersetzt werden können. Das Licht wird zu einer Modulationseinrichtung 25 gestrahlt, die als Durchlichteinheit oder Reflexionseinheit, beispielsweise mit einem LCD-Panel, die Lichtintensität, gesteuert durch eine Steuereinrichtung 26 und in Abhängigkeit von dem anzuzeigenden Bild, entsprechend einstellt.

Die Steuereinrichtung 26 steuert synchron entsprechend den Spiegel 27 an, der in mehreren Richtungen dreh- beziehungsweise schwenkbar ist, um den Laserstrahl wunschgemäß zu lenken.

Mittels des gelenkten Laserstrahls wird dann ein Bild auf die Streuscheibe 28 geschrieben, die als Reflexionsfläche mit einer Vielzahl von Reflexionselementen ausgebildet ist. Diese bildet praktisch eine Gegenstandsebene für die Abbildungsoptik 29, die das Licht bündelt und für einen Betrachter 30 aufbereitet.

Anstelle der Reflexionsfläche 28 kann auch eine Einheit mit mehreren entsprechenden Reflexionsflächen vorgesehen sein, zwischen denen das Bild mehrfach gespiegelt wird. Mit einer solchen Einheit kann zusätzlich auch ein Mikrolinsenarray kombiniert sein.

In der Figur 8 ist eine Draufsicht auf eine Reflexionsfläche 28 dargestellt, in der die Reflexionselemente in Form von Kugelkalotten 37 unregelmäßig verteilt sind, das heißt mit variablem Pitch, um darüber eine Abbildung von Strukturen der Reflexionsfläche zu vermeiden. Es findet damit ein weiter verbesserter Ausgleich von Speckleeffekten statt.

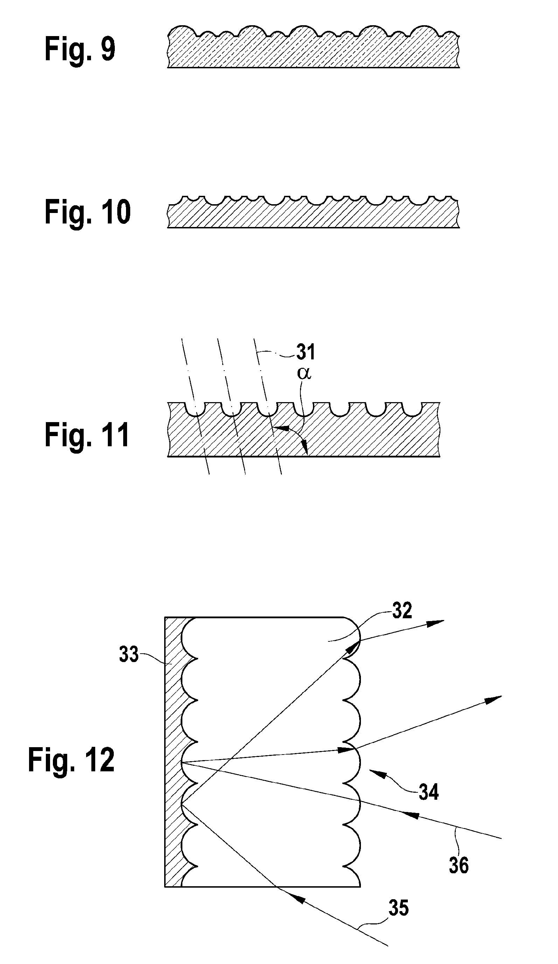

Ebenso können die Krümmungsradien der einzelnen Reflexionselemente unterschiedlich sein. Entsprechende Darstellungen im Querschnitt sind den Figuren 9 und 10 zu entnehmen, wobei die Figur 9 ein Mikrolinsenarray mit erhabenen Linsen zeigt, während die Figur 10 einen Reflexionskörper mit verschieden großen hohlspiegelartigen Reflexionselementen darstellt.

Der Figur 11 ist eine Gestaltung der Reflexionselemente als parabolische Elemente zu entnehmen, wobei jedes Reflexionselement eine Symmetrieachse 31 der rotationsparaboliden Form aufweist und die Achsen auf der Reflexionsfläche nicht senkrecht stehen. Damit wird bei schrägem Einfall auf die Reflexionsfläche das Reflektionsverhalten verbessert und die Abschattung kann verringert werden.

Aus der Figur 12 geht ein transparenter Körper 32 hervor, mit einer Reflexionsfläche 33, die beispielsweise als metallische Beschichtung der Außenfläche des transparenten Körpers 32 ausgebildet sein kann. Die Schraffur des transparenten Körpers ist der Übersichtlichkeit halber weggelassen. An der der Reflexionsfläche 33 gegenüber liegenden Fläche ist durch entsprechende Prägung der Außenseite des transparenten Körpers ein Mikrolinsenarray 34 gebildet.

Als Beispiel sind zwei Eingangstrahlen 35, 36 gezeigt, die entweder durch das Mikrolinsenarray in den transparenten Körper 32 eintreten oder durch eine Seitenfläche und die jeweils durch das Mikrolinsenarray 34 aus dem Körper wieder austreten. So können bei geeigneter Strahlenführung entweder zwei oder drei Passagen der entsprechend mikromechanisch strukturierten optischen Elemente durchlaufen werden.

Der beschriebene Körper 32 hat den Vorteil, dass er sehr einfach und kostengünstig erzeugt werden kann und dass eine Justage der Reflexionsfläche mit den Reflexionselementen gegenüber dem Mikrolinsenarray beim Aufbau der optischen Anzeigevorrichtung nicht notwendig ist.

Die Erfindung zeigt somit insgesamt einen einfachen Aufbau einer optischen Anzeigevorrichtung mit reduzierten Speckleeffekten.

## Patentansprüche

1. Optische Anzeigeinrichtung mit wenigstens einer Laserlichtquelle (1), einer Laserstrahllenkeinrichtung (2) sowie einer Abbildungsoptik (3),
**dadurch gekennzeichnet,**
**dass** die Abbildungsoptik eine Reflexionsfläche (14,28,33) mit einer Mehrzahl von nebeneinander angeordneten Reflexionselementen (15,16,37) aufweist, die jeweils einzeln konkav oder konvex gekrümmt sind.

2. Optische Anzeigeeinrichtung Anspruch 1,
**dadurch gekennzeichnet,**
**dass** die Abbildungsoptik (3) zusätzlich ein Mikrolinsenarray (34) aufweist, das der Reflexionsfläche im Strahlengang vor- oder nachgeordnet ist.

3. Optische Anzeigeeinrichtung nach Anspruch 1 oder 2,
**dadurch gekennzeichnet,**
**dass** die Reflexionsfläche (14,28,33) eben ist.

4. Optische Anzeigeeinrichtung nach Anspruch 1,2 oder 3,
**dadurch gekennzeichnet,**
**dass** die Reflexionselemente (15,16,37) Kugeloberflächenabschnitte aufweisen.

5. Optische Anzeigeeinrichtung nach Anspruch 1, 2 oder 3,
**dadurch gekennzeichnet,**
**dass** die Reflexionselemente (15,16,37) parabolische Form aufweisen.

6. Optische Anzeigeeinrichtung nach Anspruch 5,
**dadurch gekennzeichnet,**
**dass** die Symmetrieachsen (31) der Reflexionselemente (15,16,37) gegenüber der Reflexionsfläche geneigt sind.

7. Optische Anzeigeeinrichtung nach einem der vorangehenden Ansprüche mit Ausnahme des Anspruchs 3,
**dadurch gekennzeichnet,**
**dass** die Reflexionsfläche (14,28,33) konvex oder konkav gekrümmt ist.

8. Optische Anzeigeeinrichtung nach Anspruch 1 oder einem der folgenden,
**dadurch gekennzeichnet,**
**dass** die Reflexionselemente (15,16,37) aus Metall bestehen oder mit einem Metall beschichtet sind.

9. Optische Anzeigeeinrichtung nach Anspruch 1 oder einem der folgenden,
**dadurch gekennzeichnet,**
**dass** die Reflexionsfläche (14,28,33) durch eine reflektierend beschichtete Grenzfläche eines mikrostrukturierten, optisch transparenten Körpers (32) gebildet ist.

10. Optische Anzeigeeinrichtung nach Anspruch 9,
**dadurch gekennzeichnet,**
**dass** in den optisch transparenten Körper (32) ein Mikrolinsenarray (34) integriert ist.

11. Optische Anzeigeeinrichtung nach Anspruch 1 oder einem der folgenden,
**dadurch gekennzeichnet,**
**dass** der Mittenabstand der Reflexionselemente (15,16,37) und/oder der Mittenabstand der Mikrolinsen des Mikrolinsenarrays (34) entlang der von dem Laserstrahl überstrichenen Fläche variiert.

12. Optische Anzeigeeinrichtung nach Anspruch 1 oder einem der folgenden,
**dadurch gekennzeichnet,**
**dass** die Krümmung der einzelnen Reflexionselemente (15,16,37) und/oder die Brennweite der einzelnen Mikrolinsen des Mikrolinsenarrays (34) entlang der von dem Laserstrahl überstrichenen Fläche variiert.
